**Europäisches Patentamt**

**European Patent Office**

**Office européen des brevets**

(19)

(11) Veröffentlichungsnummer : **0 191 396 B2**

(12) # NEUE EUROPÄISCHE PATENTSCHRIFT

(45) Veröffentlichungstag der neuen Patentschrift :
**13.05.92 Patentblatt 92/20**

(51) Int. Cl.⁵ : **B01J 2/16,** B01J 2/00,
// C11D17/00

(21) Anmeldenummer : **86101381.1**

(22) Anmeldetag : **03.02.86**

(54) **Verfahren zur Herstellung eines rieselfähigen Granulats.**

(30) Priorität : **11.02.85 DE 3504628**

(43) Veröffentlichungstag der Anmeldung :
**20.08.86 Patentblatt 86/34**

(45) Bekanntmachung des Hinweises auf die
Patenterteilung :
**06.09.89 Patentblatt 89/36**

(45) Bekanntmachung des Hinweises auf die
Entscheidung über den Einspruch :
**13.05.92 Patentblatt 92/20**

(84) Benannte Vertragsstaaten :
**AT BE CH DE FR GB IT LI NL**

(56) Entgegenhaltungen :
**EP-A- 0 026 918
DE-A- 2 730 481
DE-A- 3 229 876
DE-A- 3 324 058
Aufbereitungstechnik 3 - 147-153; 5 262-280;
10, 615-621; 12, 744-753 (1970)
Aufbereitungstechnik 12 - 35-38 (1971)
Pharma Industrie 27 - 671-675 (1965)**

(73) Patentinhaber : **Henkel
Kommanditgesellschaft auf Aktien
Postfach 1100 Henkelstrasse 67
W-4000 Düsseldorf-Holthausen (DE)**

(72) Erfinder : **Kruse, Hans
Am Hallenbad 44
W-4052 Korschenbroich (DE)**
Erfinder : **Carduck, Franz-Josef, Dr.
Landstrasse 18
W-5657 Haan (DE)**
Erfinder : **Jacobs, Jochen, Dr.
Am Acker 20
W-5600 Wuppertal 1 (DE)**
Erfinder : **Köster, Klaus, Dr.
Kurt-Schumacher-Strasse 1
W-4018 Langenfeld (DE)**
Erfinder : **Puchta, Rolf, Dr.
Schubertweg 1
W-5657 Haan (DE)**
Erfinder : **Wilsberg, Heinz-Manfred
Bernhard-Falk-Strasse 7
W-5000 Köln 60 (DE)**

EP 0 191 396 B2

**Beschreibung**

Der Gebrauch von grobkörnigem Material anstelle von feinteiligem pulverförmigem Material hat eine Reihe von Handhabungsvorteilen. Viele pulverförmige Stoffe werden daher in grobkörnige Stoffe, beispielsweise in Granulate, umgewandelt, wobei flüssige neben pulverförmigen Hilfsstoffen häufig als Bindemittel eingesetzt werden. Sind die Hilfsstoffe inert, ist man bestrebt, den Anteil an Bindemitteln im Granulat so gering wie möglich zu halten. Häufig taucht aber auch das Problem auf, feinteilige und flüssige Wirkstoffe zu einem körnigen, sich trocken anfühlenden und gut rieselfähigen Produkt verarbeiten zu müssen, wobei es oft erwünscht ist, körnige Produkte mit einem größeren Anteil an flüssigen Bestandteilen herstellen zu können. Die Einarbeitung größerer Mengen flüssiger Bestandteile führt aber in der Regel zu feuchten Produkten, die schlecht, rieselfähig sind.

Gegenstand der vorliegenden Erfindung ist daher ein Verfahren zur Herstellung eines rieselförmigen Granulats, bestehend aus einer pulverförmigen bzw. feinkörnigen und einer flüssigen Komponente, die jeweils Bestandteile von Waschmitteln oder Waschhilfsmitteln oder Wäsche- bzw. Textilbehandlungsmitteln sind, wobei das Granulat wenigstens 20 Gew.-% der flüssigen Komponente enthält, umfassend die folgenden Verfahrensstufen:

a) Man bewegt als pulverförmige bzw. feinkörnige Komponente in einem Mischgranulator, bei dem die Mischung durch sich bewegende Mischorgane, gegebenenfalls in Kombination mit starren Einbauten, erfolgt, hochdisperse Fällungskieselsäure, Natriumaluminiumsilikat, Natriumperborat, Tetraacetylethylendiamin, $C_8$-$C_{20}$-Alkyltrimethylammoniumsalze, jeweils allein oder in Kombination miteinander,

b) man fügt als bei Raumtemperatur flüssige Komponente zu der bewegten pulverförmigen bzw. feinkörnigen Komponente nichtionisches Tensid, insbesondere vom Typ der Alkoholethoxylate, stickstoffhaltige Verbindungen aus der Anlagerungsprodukte von 1 bis 6 Mol Ethylenoxid an 1 Mol eines primären Fettamins mit einem langkettigen Alkyl- oder Alkenylrest mit 10 bis 16 Kohlenstoffatomen, β-Aminoalkyl- oder -alkenylpropionsäure-Natriumsalz umfassenden Gruppe, Silikonöl, Lösungen von Schwermetallkomplexbildnern, jeweils allein oder in Kombination miteinander,

c) man vermischt die pulverförmige und die flüssige Komponente bis man ein feuchtes Granulat einer Korngröße von höchstens 1,5 mm erhält,

d) man erhitzt das Produkt aus Verfahrensschritt c) in einem Wirbelschichtgranulator mit heißer Luft im Wirbelbett auf eine produktspezifische Temperatur, im allgemeinen 60 bis 90 °C, unter Kornvergröberung, bis man ein grobkörniges feuchtes Granulat mit einer Korngröße von 0,4 bis 4 mm erhält,

e) gegebenenfalls vermischt man das Granulat aus Verfahrensschritt d) mit wenigstens einem weiteren pulverförmigen und/oder feinkörnigen Stoff oder mit einem Gemisch aus einer pulverförmigen und einer flüssigen Komponente bei 60 bis 90 °C unter Umhüllen,

f) man senkt die Temperatur im Wirbelbett um 5 bis 10 °C unter ständiger Bewegung bis man ein trocken erscheinendes, rieselfähiges, grobkörniges Produkt enthält,

g) gegebenenfalls verfährt man mit wenigstens einem Teil des Produktes aus Verfahrensschritt f) wie in den Verfahrensschritten e) und f) angegeben.

Unter einem rieselfähigen Granulat wird im Rahmen dieser Erfindung ein grobkörniges Produkt verstanden, das aus einer pulverförmigen und einer flüssigen Komponente durch Zusammenlagerung von Teilchen, die feiner als das grobkörnige Endprodukt sind, unter Kornvergröberung erhalten wird. Das rieselfähige Produkt läßt sich ähnlich wie eine Flüssigkeit aus einem Behälter ausgießen und klumpt nicht zu gröberen Agglomeraten zusammen. Die pulverförmige Komponente aus Verfahrensschritt a) besteht aus teilchenförmigen Feststoffen mit einer Teilchengröße, die von Staubfeinheit bis 0,05 mm reicht. Dabei bedeutet die Aussage « Teilchengröße von 0,05 mm », daß das größte Teilchen einen Durchmesser von 0,05 mm aufweist. Soweit nicht anders angegeben, sind die im folgenden verwendeten Begriffe « Teilchengröße » oder « Korngröße » in demselben Sinne zu verstehen. Die « produktspezifische Temperatur » ist die Temperatur oder der enge Temperaturbereich, bei der eine Kornvergröberung unter Ausbildung eines feuchten, grobkörnigen, schlecht rieselfähigen Granulats stattfindet. Sie ist abhängig von Art und Menge der Granulatbestandteile und liegt beispielsweise in vielen Fällen im Bereich von 60 bis 90 °C. Die produktspezifische Temperatur ist durch Versuche einfach zu ermitteln. Der Begriff « flüssig » ist zu verstehen als bei Raumtemperatur flüssige oder durch Auflösen in Wasser oder organischen Lösungsmitteln oder durch Erhitzen verflüssigte Stoffe sowie fließfähige Dispersionen oder Emulsionen. Unter einer « Komponente » ist im Rahmen dieser Patentanmeldung ein einheitlicher. Stoff oder ein aus mehr als einem Stoff bestehendes flüssiges oder pulverförmiges Stoffgemisch zu verstehen. Unter einem « Mischgranulator » ist ein Mischbehälter, in dem das zu mischende Gut durch sich bewegende Mischorgane, gegebenenfalls in Kombination mit Einbauten oder durch Einblasen von Gasen bewegt wird, einschließlich eines Granuliertellers, zu verstehen. Der Begriff « feinkörnig » bedeutet eine Teilchengröße im Bereich von 0,1 bis 1 mm, und « grobkörnig » bedeutet, daß das Produkt zu wenigstens 50 Gew.-% aus Teilchen mit einer Korngröße von 0,4 bis 4 mm besteht.

Der begriff « feuchtes Granulat » in Verfahrensschritt c) und d) bedeutet, daß das Granulat teilweise zu größeren Agglomeraten zusammenklumpt und sich in diesen Zustand hinsichtlich des Fließverhaltens nicht flüssigkeitsähnlich verhält. Unter « Umhüllen » wird verstanden, daß das in der Kornvergröberungsvorrichtung gebildete Granulat oberflächlich wenigstens teilweise mit einem pulverförmigen oder feinkörnigen Stoff oder Stoffgemisch beschichtet wird. Durch die Temperaturabsenkung um 5-10 Grad kühlt man das Granulat so weit ab, daß das im Wirbelbett bei der produktspezifischen Temperatur erhaltene feuchte, grobkörnige und schlecht rieselfähige Granulat überraschend in ein trocken erscheinendes rieselfähiges, grobkörniges Granulat mit einem flüssigkeitsähnlichen Fließverhalten umgewandelt wird. Die dafür erforderliche Temperaturabsenkung von etwa 5 bis 10 °C ist abhängig von der produktspezifischen Temperatur, bei der die Kornvergröberung vorgenommen wird und auch abhängig von der Zusammensetzung des Granulats.

Man führt die Verfahrensschritte a) bis c) in einem Mischgranulator bei einer Mischguttemperatur, die mindestens so hoch wie die Erstarrungstemperatur der flüssigen Komponente, aber nicht mehr als 20 °C höher ist, aus, wobei die Mischung durch sich bewegende Mischorgane, gegebenenfalls in Kombination mit starren Einbauten, erfolgt. Ein charakteristisches Beispiel für einen derartigen Mischgranulator ist ein Pflugscharmischgranulator der Fa. Lödige, Paderborn, Bundesrepublik Deutschland. Man überführt das Produkt der Verfahrensschritte a) bis c) in Wirbelbett. Ein typisches Beispiel für ein Wirbelbett ist ein Wirbelschicht-Granulator der Firma Glatt, Bundesrepublik Deutschland. Durch Einblasen von erhitzter Luft oder erhitzten sonstigen Gasen lassen sich die für das erfindungsgemäße Verfahren wichtigen Temperaturen der Verfahrensschritte d) bis g) leicht einstellen und verändern. Gewünschtenfalls führt man einen Teil des Produktes aus Verfahrensschritt f), d. h. beispielsweise abgetrenntes Granulat mit einer Korngröße unter 0,4 mm oder abgetrenntes Granulat mit einer Korngröße über 4 mm, das man anschließend auf Korngrößen unter 4 mm zerkleinert hat, oder Granulat. das man mehrfach umhüllen will, im Kreislauf in die Verfahrensstufen e) und f) zurück.

Das erfindungsgemäße Verfahren ist gut geeignet für die Herstellung von Waschmitteln oder Vor- bzw. Zwischenprodukten für Waschmittel oder von Waschhilfsmitteln oder Wäsche- bzw. Textilbehandlungsmitteln. Wendet man das erfindungsgemäße Verfahren zur Herstellung derartiger Produkte an, setzt man als pulverförmige bzw. feinkörnige und flüssige Komponenten Bestandteile von Waschmitteln oder Waschhilfsmitteln oder Wäsche- bzw. Textilbehandlungsmittel ein. Darüber hinaus können noch pulverförmige oder flüssige Hilfsstoffe, wie beispielsweise Trägerstoffe oder Bindemittel verwendet werden, wobei diese Hilfsstoffe sowohl Waschmittelbestandteile als auch waschmittelfremde Stoffe darstellen können. Als Beispiel für ein Erzeugnis, das durch das erfindungsgemäße Verfahren mit besonderem Vorteil hergestellt werden kann, sei ein Waschhilfsmittel-Granulat, daß zur Erzielung besonders guter Waschergebnisse beim Vorliegen starker oder hartnäckiger Verschmutzungen der Waschlauge zugesetzt werden kann, genannt. Als pulverförmige bzw. feinkörnige Komponente werden hochdisperse Fällungskieselsäure. Natriumaluminiumsilikat, Natriumperborat, Tetraacetylethylendiamin, $C_8$-$C_{20}$-Alkyltrimethylammoniumsalze, allein oder in Kombination miteinander, eingesetzt. Geeignete flüssige Komponenten sind nichtionische Tenside, insbesondere vom Typ der Alkoholethoxylate, stickstoffhaltige Verbindungen aus der Anlagerungsprodukte von 1 bis 6 Mol Ethylenoxid an 1 Mol eines primären Fettamins mit einem langkettigen Alkyl- oder Alkenylrest mit 10 bis 16 Kohlenstoffatomen, β-Aminoalkyl- oder -alkenylpropionsäure-Natriumsalz umfassenden Gruppe. Silikonöl. Lösungen von Schwermetallkomplexbildnern, und zwar jeweils allein oder in Kombination miteinander.

Wie später noch gezeigt werden wird, schützt die auf der Oberfläche befindliche flüssige Komponente die darunter liegenden Bestandteile vor unerwünschter Einwirkung von außerhalb des Korns. Diese überraschende Beobachtung kann dadurch mit besonderem Vorteil ausgenutzt werden, daß man miteinander schlecht oder nicht verträgliche Stoffe so miteinander zu einem Granulatkorn vereinigt, daß sie durch diese Schutzschicht aus der flüssigen Komponente voneinander getrennt vorliegen und dadurch nicht miteinander reagieren können. Will man diese wertvolle Eigenschaft des erfindungsgemäßen Verfahrens ausnutzen, verfährt man insbesondere so, daß man das Granulat aus Verfahrensschritt d) bzw. f) mit wenigstens einem weiteren pulverförmigen oder feinkörnigen Stoff oder mit einem Gemisch aus einer pulverförmigen und einer flüssigen Komponente bei der produktspezifischen Temperatur vollständig oder teilweise umhüllt. Durch diese Maßnahme lassen sich beispielsweise in einem Granulatkorn Perverbindungen und Aktivatoren für Perverbindungen gleichzeitig unterbringen, ohne daß diese Komponenten miteinander reagieren und damit bei längerer Lagerung nennenswert an Aktivität verlieren; jedenfalls ist ein Aktivitätsverlust während des Lagerns durch die Anwendung des erfindungsgemäßen Verfahrens erheblich vermindert. In einer bevorzugten Ausführungsform des erfindungsgemäßen Verfahrens umhüllt man daher das Granulat mit einem Gehalt an Aktivatoren für Perverbindungen aus Verfahrensschritt d) in Verfahrensschritt e) mit einem Vorgemisch oder leinkörnigen Granulat aus Natriumperborat, insbesondere aus Natriumperboratmonohydrat und Alkoholethoxylat, insbesondere $C_{14/15}$-Oxoalkohol mit 7 Mol Ethylenoxid, wobei das Vorgemisch bzw. das Granulat aus Natriumperboratmonohydrat und dem Oxoalkoholethoxylat vorzugsweise im Gewichtsverhältnis (6 bis 7) zu (4 bis 3) vorliegt.

Das erfindungsgemäße Verfahren gestattet es ebenfalls, ein inertes Hüllmaterial aufzubringen, um

3

dadurch einen noch stärkeren Schutz der im Inneren des Korns vorliegenden Komponente gegenüber einer außen auf dem Granulatkorn angebrachten Wirkstoffkomponente zu gewährleisten. Eine bevorzugte Ausführungsform des erfindungsgemäßen Verfahrens besteht darin, daß man Verfahrensschritt e) zunächst mit einem ersten, meist inertem Hüllmaterial und dann mit einem zweiten Hüllmaterial durchführt, wobei das erste Hüllmaterial so ausgewählt wird, daß es sowohl gegenüber dem Produkt der Verfahrensschritte a) bis d) als auch gegenüber dem zweiten Hüllmaterial, also beispielsweise einem Vorgemisch oder Granulat aus Natriumperborat und Alkoholethoxylat verträglich ist. Ein derartiges Verfahren ist daher bevorzugt. Ein Waschhilfsmittel mit besonders wertvollen Eigenschaften erhält man nach dem erfindungsgemäßen Verfahren, wenn man

a) 5 bis 55 Gew.-Teile hochdisperse Fällungskieselsäure oder Natriumalumosilikat

3 bis 20 Gew.-Teile Tetradecyltrimethylammoniumsalz

1 bis 5 Gew.-Teile eines Vorgemischs aus 4 Gewichtsteilen Polydimethylsiloxan und 6 Gewichtsteilen hochdisperser Fällungskieselsäure sowie gegebenenfalls

10 bis 40 Gew.-Teile Tetraacetylethylendiamin unter kreisender Bewegung miteinander vermischt,

b) auf die in Bewegung befindliche Mischung nacheinander oder gleichzeitig

15 bis 45 Gew.-Teile Alkoholethoxylat

1 bis 10 Gew.-Teile einer 10- bis 40-gewichtsprozentigen wäßrigen Lösung eines Schwermetallkomplexbildners

aufsprüht,

c) das feuchte Gemisch aus Verfahrensschritt b) 10 bis 60 Sekunden lang unter Bildung eines feuchten Granulats bewegt,

d) das Produkt aus Verfahrensschritt c) in einen Wirbelschichtgranulator überführt und mit heißer Luft im Wirbelbett auf 60 bis 90°C unter Kornvergröberung erhitzt,

e) gegebenenfalls eine Umhüllung mit verträglichem Material, insbesondere mit einem Granulat aus Natriumperborat und Alkoholethoxylat bei 60 bis 90 °C vornimmt,

f) die Temperatur im Wirbelbett um 5 bis 10°C unter Ausbildung eines trockenen, rieselfähigen, grobkörnigen Granulats senkt.

Die erhaltenen Verfahrensprodukte zeichnen sich trotz ihres hohen Gehaltes an einer flüssigen Komponente durch eine einwandfreie Rieselfähigkeit und demzufolge gute Handhabbarkeit aus. Auch nach längerer Zeit werden diese Eigenschaften nicht merklich beeinträchtigt Verarbeitet man nach dem erfindungsgemäßen Verfahren empfindliche Rohstoffe, bleiben die Eigenschaften der empfindlichen Rohstoffe über längere Zeit unverändert, als das der Fall wäre, wenn man Granulate ohne Anwendung des erfindungsgemäßen Verfahrens herstellen würde.

Beispiele

Die folgenden Beispiele beschreiben die erfindungsgemäße Herstellung von Granulaten, die Waschmittelbestandteile enthalten. Derartige Granulate setzt man der Waschlauge in manchen Fällen zur Erzielung besonders guter Waschergebnisse beim Vorliegen starker oder hartnäckiger Verschmutzungen zu. Die Erfindung wird aber hierdurch ausdrücklich nicht auf die Herstellung von Granulaten mit Waschmittelbestandteilen beschränkt.

Beispiel 1

In einem 130 Liter fassenden Pflugscharmischer der Fa. Lödige, Bundesrepublik Deutschland, wurden 4,65 kg Fällungskieselsäure, 9,23 kg Tetraacetylethylendiamin, 3,39 kg Tetradecyltrimethylammoniumbromid, 1,11 kg eines Gemischs aus 40 Gew.-% Polydimethylsiloxan und 60 Gew.-% Fällungskieselsäure bei Raumtemperatur vermischt und dann innerhalb von 2 Minuten mit einem Gemisch aus 9,23 kg flüssigem $C_{14/15}$-Oxoalkohol + 7 Mol Ethylenoxid und 2.31 kg einer 33-gewichtsprozentigen wäßrigen Lösung des Hexanatriumsalzes der Ethylendiamintetramethylenphosphonsäure besprüht. Nach 30 Sekunden Mischzeit mit Zerhacker war ein feuchtes, schlecht rieselfähiges Granulat mit einer Korngröße von bis zu 1 mm entstanden. Dieses Granulat wurde in einen Wirbelschicht-Granulator der Fa. Glatt, Bundesrepublik Deutschland, überführt und durch Einblasen von erhitzter Luft auf 70°C erwärmt. Hierbei vergröberte sich das Granulat auf eine Korngröße von im wesentlichen 0,4 bis 3 mm; es blieb feucht und war schlecht rieselfähig, aber noch wirbelfähig. Die Temperatur des Granulats wurde dann auf 65°C abgesenkt. Das Granulat wurde dabei trotz eines Gehaltes an über 30 Gew.-% flüssiger Bestandteile oberflächlich trokken und gut rieselfähig. Abgetrennte Feinanteile (unter 0,4 mm) und zerriebene Grobanteile (über 4 mm) ließen sich durch Erhitzen auf 70 °C und anschließendes Abkühlen auf 65°C in der Wirbelschicht ebenfalls zu trockenem und gut rieselfähigem Granulat der Korngröße 0,4 bis 4 mm verarbeiten.

Verwendete man anstelle des Wirbelschicht-Granulators einen beheizten Granulierteller, erhielt man vergleichbare Ergebnisse.

Beispiel 2

In einem Lödige-Pflugscharmischer wurden wie in Beispiel 1 4,65 kg Fällungskieselsäure, 9,23 kg Tetraacetylethylendiamin, 3,39 kg Tetradecyltrimethylammoniumbromid, 1,11 kg eines Gemisches aus 40 Gew.-% Polydimethylsiloxan und 60 Gew.-% Fällungskieselsäure gemischt und dann mit einem Gemisch aus 9,23 kg flüssigem $C_{14/15}$-Oxoalkohol + 7 Mol Ethylenoxid und 2,31 kg einer 33-gewichtsprozentigen wäßrigen Lösung des Hexanatriumsalzes der Ethylendiamintetramethylenphosphonsäure besprüht und bis zur Bildung eines feinkörnigen und feuchten Granulats umgewälzt. Dieses Granulat wurde im Wirbelschicht-Granulator bei 70°C bis zur Bildung eines Granulats mit einer Korngröße von im wesentlichen 0,4 bis 3 mm verwirbelt. Dann fügte man auf 7 Gewichtsteile Granulat 3 Gewichtsteile eines Gemischs aus 65 Gewichtsteilen Natriumperboratmonohydrat und 35 Gewichtsteile $C_{14/15}$-Oxoalkohol + 7 Mol Ethylenoxid hinzu und erwärmte den hierdurch abgekühlten Granulatorinhalt auf 75 °C. Das Natriumperborat-Vorgemisch lagerte sich dabei auf dem zunächst gebildeten Granulat ab. Nach Abkühlen auf 70°C erhielt man ein gut rieselfähiges Granulat.

Beispiel 3

Dieses Beispiel zeigt die gute Lagerstabilität des nach dem erfindungsgemäßen Verfahren hergestellten Produkts des Beispiels 2.

Zu diesem Zweck wurden als Vergleichssubstanz im Lödige-Mischer bei Raumtemperatur eine Mischung mit der gleichen Zusammensetzung, wie das Endprodukt des Beispiels 2 hat, hergestellt und bei 30 °C und 80% relativer Luftfeuchtigkeit in Pappe-Schachteln 1 Woche gelagert. Danach wurde der Erhaltungsgrad des Tetraacetylethylendiamins (TAED) und des Perborats in % ermittelt. Man erhielt folgendes Ergebnis:

| Testprodukt | Erhaltungsgrad % | |
|---|---|---|
| | TAED | Perborat |
| Vergleichssubstanz | 62,3 | 66,0 |
| erfindungsgemäß hergestelltes Granulat | 79,9 | 82,4 |

Das durch das erfindungsgemäße Verfahren hergestellte Granulat wies nach der Lagerung in feuchter Luft eine erheblich höhere Aktivität sowohl des als Aktivator für das Perborat dienenden TAED als auch des Perborats selbst auf. Dieses vorteilhafte Ergebnis des nach dem erfindungsgemäßen Verfahren hergestellten Granulats dürfte auf die an der Oberfläche vorhandene flüssige Komponente, d.h. dem Oxoalkoholethoxylat Zurückzuführen sein. Tatsächlich wurde durch Untersuchungen mit Hilfe der Sekundär-Ionen-Massenspektroskopie (SIMS) und der Ionen-Streuungsspektroskopie (ISS) festgestellt, daß die Oberfläche des Granulats im wesentlichen mit Oxoalkoholethoxylat, das das Granulatkorn vor Feuchtigkeit von außerhalb des Korns schützt und eine Reaktion zwischen Perborat und TAED stark herabsetzt, bedeckt ist.

Beispiel 4

In gleicher Weise wie in Beispiel 1 wurde ein Granulat mit folgender Endprodukt-Zusammensetzung hergestellt:

| Zusammensetzung | Beispiel 4 |
|---|---|
| Fällungskieselsäure | 11,4% |
| Natriumperboratmonohydrat | 33,1% |
| Tetradecyltrimethylammoniumbromid | 12% |
| $C_{14/15}$-Oxoalkohol + 7 Mol EO | 33,1% |
| Hexanatriumsalz der Ethylendiamintetra-methylenphosphonsäure | 2,7% |
| Polydimethylsiloxan | 1,6% |
| Wasser | 5,9% |

Auch dieses Produkt fiel als trockenes, gut rieselfähigers Granulat mit hoher Lagerstabilität hinsichtlich des Erhaltungsgrades von Perborat an.

**Patentansprüche**

1. Verfahren zur Herstellung eines rieselförmigen Granulats, bestehend aus einer pulverförmigen bzw. feinkörnigen und einer flüssigen Komponente, die jeweils Bestandteile von Waschmitteln oder Waschhilfsmitteln oder Wäsche- bzw. Textilbehandlungsmitteln sind, wobei d s Granulat wenigstens 20 Gew.-% der flüssigen Komponente enthält, umfassend die folgenden Verfahrensstufen:

a) Man bewegt als pulverförmige bzw. feinkörnige Komponente in einem Mischgranulator, bei dem die Mischung durch sich bewegende Mischorgane, gegebenenfalls in Kombination mit starren Einbauten, erfolgt, hochdisperse Fällungskieselsäure, Natriumaluminiumsilikat, Natriumperborat, Tetraacetylethylendiamin, $C_8$-$C_{20}$-Alkyltrimethylammoniumsalze, jeweils allein oder in Kombination miteinander,

b) man fügt als bei Raumtemperatur flüssige Komponente zu der bewegten pulverförnigen bzw. feinkörnigen Komponente nichtionsiches Tensid, insbesondere von Typ der Alkoholethoxylate, stickstoffhaltige Verbindungen aus der Anlagerungsprodukte von 1 bis 6 Mol Ethylenoxid an 1 Mol eines primären Fettamins mit einem langkettigen Alkyl- oder Alkenylrest mit 10 bis 16 Kohlenstoffatomen, β-Aminoalkyl- oder -Alkenylpropionsäure-Natriumsalz umfassenden Gruppe, Silikonöl, Lösungen von Schwermetallkomplexbildnern, jeweils allein oder in Kombination miteinander,

c) man vermischt die pulverförmige und die flüssige Komponente bis man ein feuchtes Granulat einer Korngröße von höchstens 1,5 mm erhält,

d) man erhitzt des produkt aus Verfahrensschritt c) in einem Wirbelschichtgranulator mit heißer Luft im Wirbelbett auf eine produktspezifische Temperatur, im allgemeinen 60 bis 90 °C, unter Kornvergröberung, bis man ein grobkörniges feuchtes Granulat mit einer Korngröße von 0,4 bis 4 mm erhält,

e) gegebenenfalls vermischt man das Granulat aus Verfahrensschritt d) mit wenigstens einem weiteren pulverförmigen und/oder feinkörnigen Stoff oder mit einem Gemisch aus einer pulverförmigen und einer flüssigen Komponente bei 60 bis 90 °C unter Umhüllen,

f) man senkt die Temperatur in Wirbelbett um 5 bis 10 °C unter ständiger Bewegung bis man ein trocken erscheinendes, rieselfähiges, grobkörniges Produkt enthält,

g) gegebenenfalls verfährt man mit wenigstens einem Teil des Produktes aus Verfahrensschritt f) wie in den Vefahrensschritte e) und f) angegeben.

2. Verfahren nach Anspruch 1 dadurch gekennzeichnet, daß man Verfahrensschritt e) mit einem Gemisch oder feinkörnigen Granulat aus Natriumperborat, insbesondere Natriumperboratmonohydrat und Alkoholethoxylat, insbesondere $C_{14/15}$-Oxoalkohol mit 7 Mol Ethylenoxid, vorzugsweise im Gewichtsverhältnis (6 bis 7):(4 bis 3) als Hüllmaterial durchfürt.

3. Verfahren nach einem der Ansprüche 1 oder 2, dadurch gekennzeichnet, daß man Verfahrensschritt e) zunächst mit einem ersten Hüllmaterial und dann mit einem zweiten Hüllmaterial durchführt, wobei das erste Hüllmaterial so ausgewählt wird, daß es sowohl gegenüber dem Produkt der Verfahrensschritte a) bis d) als auch gegenüber dem zweiten Hüllmaterial verträglich ist.

4. Verfahren nach einem der Ansprüche 1 bis 3, dadurch gekennzeichnet, daß man

a) 5 bis 55 Gew.-Teile hochdisperse Fällungskieselsäure oder Natriumalumosilikat,

3 bis 20 Gew.-Teile Tetradecyltrimethylammoniumsalz

1 bis 5 Gew.-Teile eines Vorgemisches aus Gewichts-Teilen Polydimethylsiloxan und 6 Gewichts- Teilen hochdisperser Fällungskieselsäure sowie ggf.

10 bis 40 Gew.-Teile Tetraacetylethylendiamin unter kreisender Bewegung miteinander vermischt,

b) auf die in Bewegung befindliche Mischung nacheinander oder gleichzeitig

15 bis 45 Gew.-Teile Alkoholethoxylat

1 bis 10 Gew.-Teile einer 10 bis 40 gew.-%igen wäßrigen Lösung eines Schwermethallkomplexbildners

aufsprüht,

c) das feuchte Gemisch aus Verfahrensschritt b) unter Bildung eines feuchten Granulats bewegt,

d) das Produkt aus Verfahrensschritt c) in einen Wirbelschichtgranulator überführt und mit heißer Luft im Wirbelbett auf 60 bis 90 °C unter Kornvergröberung erhitzt,

e) ggf. eine Umhüllung mit verträglichem Material, insbesondere mit einem Granulat aus Matriumperborat und Alkoholethoxylat bei 60 bis 90 °C vornimmt,

f) die Temperatur im Wirbelbett um 5 bis 10°C unter Ausbildung eines trockenen, rieselfähigen, grobkörnigen Granulats senkt.

## Claims

1. A process for the production of free-flowing granules consisting of a powder-form or fine-grained component and a liquid component, which are constituents of detergents or washing aids or of laundry or textile treatment preparations, the granules containing at least 20% by weight of the liquid component, comprising the following steps:

a) highly disperse precipitated silica, sodium aluminium silicate, sodium perborate, tetraacetyl ethylenediamine, $C_{8-20}$ alkyl trimethyl ammonium salts, individually or in combination with one another, are moved around as the powder-form or fine-grained component in a mixer-granulator, in which mixing is carried out by moving mixing elements, optionally in combination with rigid fittings,

b) nonionic surfactant, more particularly of the alcohol ethoxylate type, nitrogen-containing compounds from the group consisting of adducts of 1 to 6 mol ethylene oxide with 1 mol of a primary fatty amine containing a long-chain alkyl or alkenyl group with 10 to 16 carbon atoms, $\beta$-aminoalkyl or $\beta$-aminoalkenyl propionic acid sodium salt, silicone oil, solutions of heavy metal complexing agents either individually or in combination with one another are added to the moved powder-form of fine-grained component liquid at room temperature,

c) the powder-form component and the liquid component are mixed until moist granules having a particle size of at most 1.5 mm are obtained,

d) the product from step c) is heated with hot air in a fluidized-bed granulator to a product-specific temperature of generally 60 to 90°C with coarsening of the granules until coarse moist granules having a particle size of from 0.4 mm to 4 mm are obtained,

e) the granules from step d) are optionally mixed with at least one other powder-form and/or fine-grained material or with a mixture of a powder-form component and a liquid component at the temperature of 60 to 90°C, becoming coated therewith in the process,

f) the temperature in the fluidized-bed is lowered by 5 to 10°C with continuous movement until a dry-looking, free-flowing coarse-grained product is obtained,

g) at least part of the product from step f) is optionally subjected to steps e) and f).

2. A process as claimed in claim 1, characterized in that process step e) is carried out with a mixture or fine granules of sodium perborate, more especially sodium perborate monohydrate and alcohol ethoxylate, more especially $C_{14/15}$ oxoalcohol with 7 mol ethylene oxide, preferably in a ratio by weight of (6 - 7) to (4 - 3) as coating material.

3. A process as claimed in claim 1 or 2, characterized in that process step e) is carried out first with a first coating material and then with a second coating material, the first coating material being selected in such a way that it is compatible both with the product of process steps a) to d) and with the second coating material.

4. A process as claimed in any of claims 1 to 3, characterized in that

a) 5 to 55 parts by weight of highly disperse precipitated silica or sodium alumosilicate

3 to 20 parts by weight of tetradecyl trimethyl ammonium salt,

1 to 5 parts by weight of a premix of 4 parts by weight of polydimethyl siloxane and 6 parts by weight of highly disperse precipitated silica and, optionally,

10 to 40 parts by weight of tetraacetyl ethylene diamine are mixed together with circular movement,

b) 15 to 45 parts by weight of alcohol ethoxylate and

1 to 10 parts by weight of a 10 to 40% by weight aqueous solution of a heavy metal complexing agent are sprayed successively or simultaneously onto the moving mixture,

c) the moist mixture from process step b) is moved to form moist granules,

d) the product from process step c) is transferred to a fluidized-bed granulator and heated with hot air in a fluidized bed to 60 - 90°C with coarsening of the grain,

e) a coating of a compatible material, more especially granules of sodium perborate and alcohol ethoxylate, is optionally applied at 60 to 90°C,

f) the temperature in the fluidized bed is lowered by 5 to 10°C to form dry, free-flowing, coarse granules.

**Revendications**

1. Procédé de préparation d'un granulé apte à l'écoulement constitué d'un composant pulvérulent ou à grains fins et d'un composant liquide, qui sont des constituants d'agents de lavage ou d'agents auxiliaires de lavage ou encore des agents de traitement du linge ou des textiles, la teneur en composant liquide du granulé étant d'au moins 20% en poids, ce procédé comprenant les étapes opératoires suivantes:

a) on met en mouvement en tant que composant pulvérulent ou à grains fins dans un granulateur de mélange, dans lequel le mélange a lieu au moyen d'organes de mélange en mouvement, éventuellement en combinaison avec des pièces rapportées rigides, de l'acide silicique de précipitation en forte dispersion, du silicate de sodium/aluminium, du perborate de sodium, la tétra-acétyl-éhylène-diamine, les sels d'alkyl(en $C_8$-$C_{20}$)triméthyl-ammonium, chaque fois seuls ou en combinaison l'un avec l'autre,

b) on ajoute au composant pulvérulent ou à grains fins mis en mouvement, comme composant liquide à température ambiante, un agent tensio-actif non ionique, en particulier, du type des éthoxylates d'alcools, des composés azotés choisis parmi le groupe comprenant des produits de fixation de 1 à 6 moles d'oxyde d'éthylène sur 1 mole d'une amine grasse primaire comportant un radical alkyle ou alcényle à longue chaîne contenant 10 à 16 atomes de carbone, de même que les sels sodiques d'acides β-amino-alkyl- ou -alcényl-propioniques, l'huile de silicone, les solutions d'agents complexants de métaux lourds, chaque fois seuls ou en combinaison l'un avec l'autre,

c) on mélange le composant pulvérulent et le composant liquide jusqu'à ce qu'on obtienne un granulé humide en grains d'une grosseur de 1,5 mm maximum;

d) on chauffe le granulé provenant de l'étape opératoire c) à une température spécifique aux produits, généralement de 60 à 90°C, dans un granulateur à couche fluidisée avec de l'air chaud en faisant grossir les grains jusqu'à ce qu'on obtienne un granulé humide à gros grains d'une grosseur de 0,4 à 4,0 mm;

e) on mélange éventuellement le granulé de l'étape opératoire d) avec au moins une autre substance pulvérulente et/ou à grains fins ou avec un mélange d'un composant pulvérulent et d'un composant liquide à une température de 60 à 90°C, avec enrobage;

f) on abaisse la température de 5 à 10°C dans la couche fluidisée avec mouvement constant jusqu'à ce qu'on obtienne un produit à gros grains, apte à l'écoulement et d'un aspect sec;

g) avec au moins une partie du produit de l'étape opératoire f), on procède éventuellement comme indiqué dans les étapes opératoires e) et f).

2. Procédé selon la revendication 1, **caractérisé en ce qu'**on effectue l'étape opératoire e) avec un mélange ou un granulé à grains fins constitué de perborate de sodium, en particulier, de perborate de sodium à une molécule d'eau et d'un éthoxylate d'alcool, en particulier, d'un oxo-alcool en $C_{14/15}$ avec 7 moles d'oxyde d'éthylène, de préférence, dans un rapport pondéral (6 à 7) : (4 à 3) comme matière d'enrobage.

3. Procédé selon une des revendications 1 ou 2, caractérisé **en ce qu'**on effectue l'étape opératoire e) tout d'abord avec une première matière d'enrobage, puis avec une deuxième matière d'enrobage, la première matière d'enrobage étant choisie de telle sorte qu'elle soit compatible tant vis-à-vis du produit des étapes opératoires a) à d) que vis-à-vis de la deuxième matière d'enrobage.

4. Procédé selon une des revendications 1 ou 3, caractérisé **en ce que**, avec un mouvement giratoire, on mélange ensemble:

a) 5 à 55 parties en poids d'acide silicique de précipitation en forte dispersion ou un aluminosilicate de sodium,

3 à 20 parties en poids d'un sol de tétradécyl-triméthylammonium,

1 à 5 parties en poids d'un prémélange de 4 parties en poids de polydiméthylsiloxane et de 6 parties en poids d'acide silicique de précipitation en forte dispersion, ainsi qu'éventuellement

10 à 40 parties en poids de tétra-acétyl-éthylène-diamine,

b) sur le mélange se trouvant en mouvement, on pulvérise successivement ou simultanément :

15 à 45 parties en poids d'éthoxylate d'alcool,

1 à 10 parties en poids d'une solution aqueuse à 10-40% en poids d'un agent complexant de métaux lourds,

c) on met en mouvement le mélange humide de l'étape opératoire b) avec formation d'un granulé humide,

d) on transfère le produit de l'étape opératoire c) dans un granulateur à couche tourbillonnaire et on le chauffe à l'air chaud dans un lit fluidisé à une température de 60 à 90°C avec grossissement des grains,

e) on procède éventuellement à un enrobage avec une matière compatible, en particulier, avec un granulé constitué de perborate de sodium et d'éthoxylate d'alcool, à une température de 60 à 90°C,

f) on abaisse la température régnant dans le lit fluidisé de 5 à 10°C avec formation d'un granulé sec, apte à l'écoulement et à gros grains.